# EUROPEAN PATENT APPLICATION

(11) **EP 4 485 591 A1**
(43) Date of publication of application: **01.01.2025**
(21) Application number: 22966046.9
(22) Date of filing: 21.11.2022
(51) Int. Cl.: H01M 10/04, H01M 50/50

(54) **COMPRESSING APPARATUS, BATTERY, BATTERY CELL, MACHINING METHOD AND PRODUCTION SYSTEM**

(71) Applicant: Contemporary Amperex Technology Co., Limited, Ningde, Fujian 352100 (CN)
(72) Inventor: XU, Yueming, Ningde, Fujian 352100 (CN); FAN, Xiang, Ningde, Fujian 352100 (CN); LIN, Gang, Ningde, Fujian 352100 (CN); BAI, Qinglin, Ningde, Fujian 352100 (CN); WANG, Yonghui, Ningde, Fujian 352100 (CN)
(74) Representative: von Tietzen und Hennig, Nikolaus
(86) International application number: PCT/CN2022/133297
(87) International publication number: WO 2024/108344

(57) **Abstract**

Embodiments of this application provide a pressurizing apparatus, a battery, a battery cell, a processing method, and a production system. The pressurizing apparatus is configured to pressurize a flattened electrode assembly, and includes: a support member configured for placing the electrode assembly; and a pressurizing assembly configured to pressurize the electrode assembly, where the pressurizing assembly and the support member are disposed on two sides of a tab of the electrode assembly. The pressurizing apparatus in the embodiments of this application can reduce the height of a flattened layer of the electrode assembly and the internal space of the battery cell occupied by the flattened layer of the electrode assembly, thus increasing the energy of the battery cell.

## Description

### TECHNICAL FIELD

This application relates to the field of battery technologies, and in particular, to a pressurizing apparatus, a battery, a battery cell, a processing method, and a production system.

### BACKGROUND

Currently, energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

During production of battery cells, how the energy of battery cells is increased is a problem to be resolved urgently.

### SUMMARY

In view of the foregoing problem, this application provides a pressurizing apparatus, a battery, a battery cell, a processing method, and a production system, so as to increase the energy of battery cells.

According to a first aspect, this application provides a pressurizing apparatus configured to pressurize a flattened electrode assembly and including: a support member configured for placing the electrode assembly; and a pressurizing assembly configured to pressurize the electrode assembly, where the pressurizing assembly and the support member are disposed on two sides of a tab of the electrode assembly.

In the technical solutions of the embodiments of this application, the pressurizing assembly is configured to pressurize the electrode assembly. The pressurizing assembly applies pressure to the electrode assembly, which can reduce the height of a flattened layer of the electrode assembly and the internal space of the battery cell occupied by the flattened layer of the electrode assembly, thus increasing the energy of the battery cell.

In some embodiments, the pressurizing assembly includes: a pressurizing member configured to pressurize the electrode assembly; and a pressurizing drive member connected to the pressurizing member and configured to drive the pressurizing member to pressurize the electrode assembly.

The pressurizing drive member drives the pressurizing member to pressurize the electrode assembly, such that the pressurizing drive member adjusts the pressure applied by the pressurizing member to the electrode assembly, thus improving the pressurization accuracy.

In some embodiments, the pressurizing apparatus includes a support frame, and the pressurizing assembly is mounted on the support frame. The pressurizing assembly is mounted on the support frame, such that the pressurizing assembly is located above the electrode assembly, which is conducive for the pressurizing assembly to pressurize the electrode assembly.

In some embodiments, the pressurizing apparatus includes a detection assembly disposed on the support frame and configured to detect a distance between the electrode assembly and the detection assembly.

The detection assembly is disposed on the support frame to detect the distance between the electrode assembly and the detection assembly. The height of the electrode assembly is calculated based on the distance, and the height of the flattened layer of the electrode assembly is obtained based on the height of the electrode assembly. Through monitoring on the height of the flattened layer, the accuracy of the pressurizing assembly in pressurizing the electrode assembly can be improved, thus improving the consistency of the pressurized electrode assembly.

In some embodiments, the pressurizing apparatus includes a positioning assembly configured to position the electrode assembly between the support member and the pressurizing assembly. The electrode assembly is positioned between the support member and the pressurizing assembly via the positioning assembly, allowing the electrode assembly to be kept at a position during pressurization, improving the parallelism of the flattened layers of the pressurized electrode assembly.

In some embodiments, the positioning assembly includes: a mounting seat; and a clamping jaw floatingly mounted on the mounting seat, where the clamping jaw is configured to clamp the electrode assembly. The clamping jaw is floatingly mounted on the mounting seat, so that the clamping jaw moves as the height of the electrode assembly decreases, keeping the clamping jaw and the electrode assembly stationary relative to each other, thus improving the consistency of the pressurizing apparatus in pressurizing the electrode assembly.

In some embodiments, the positioning assembly includes a clamping jaw drive member. The clamping jaw is connected to the clamping jaw drive member, and the clamping jaw drive member is configured to drive the clamping jaw to clamp the electrode assembly. The clamping jaw drive member drives the clamping jaw to clamp the electrode assembly, so as to improve the stability of the clamping jaw clamping the electrode assembly.

In some embodiments, the positioning assembly includes a floating drive member mounted on the mounting seat. The clamping jaw drive member is disposed on the floating drive member, and the floating drive member is configured to drive the clamping jaw and the clamping jaw drive member to move along a pressurization direction of the pressurizing assembly. The floating drive member drives the clamping jaw and the clamping jaw drive member to move along the pressurization direction of the pressurizing assembly, so as to keep the clamping jaw and the electrode assembly stationary relative to each other.

In some embodiments, the floating drive member is a floating cylinder. The floating cylinder drives the clamping jaw and the clamping jaw drive member to move along the pressurization direction of the pressurizing assembly, which is easy to implement.

In some embodiments, the floating drive member includes a guide rod mounted on a guide rod mounting seat of the mounting seat; an elastic member, where the elastic member sleeves the corresponding guide rod; a bearing disposed on the guide rod, where the elastic member is configured to support the bearing; and a mounting member disposed on the bearing and configured to mount the clamping jaw drive member. The elastic member supports the bearing, allowing the bearing to move along an extension direction of the guide rod, so as to keep the clamping jaw and the electrode assembly stationary relative to each other. The structure is simple, and costs are reduced.

In some embodiments, a cross-sectional shape of the clamping jaw is V-shaped in a pressurization direction of the pressurizing assembly. The cross-sectional shape of the clamping jaw is arranged to be V-shaped, allowing the clamping jaw to clamp electrode assemblies of different sizes.

In some embodiments, a pressurization direction of the pressurizing assembly is a gravity direction of the electrode assembly. The pressurizing assembly pressurizes the electrode assembly along the gravity direction of the electrode assembly, which is easy to implement.

According to a second aspect, this application provides a processing method of battery cell, including: placing a flattened electrode assembly at a pressurizing apparatus; and controlling the pressurizing apparatus to pressurize the electrode assembly, so as to compress a height of a flattened layer of the electrode assembly. The pressurizing apparatus is controlled to pressurize the electrode assembly to compress the height of the flattened layer of the electrode assembly, reducing the internal space of the battery cell occupied by the tab of the electrode assembly, thus increasing the energy of the battery cell.

In some embodiments, the processing method further includes: positioning the electrode assembly when the electrode assembly is pressurized. With the electrode assembly positioned, the electrode assembly can be maintained at a position during pressurization, improving the parallelism of the flattened layers of the pressurized electrode assembly.

In some embodiments, the step of positioning the electrode assembly when the electrode assembly is pressurized includes: controlling a positioning assembly of the pressurizing apparatus to clamp the electrode assembly.

In some embodiments, the step of controlling the pressurizing apparatus to pressurize the electrode assembly includes: controlling, via a pressurizing drive member of the pressurizing apparatus, a pressurizing member of the pressurizing apparatus to move to a pressurization position, so that the pressurizing member pressurizes the electrode assembly; and controlling a pressurization time of the pressurizing member at the pressurization position to be greater than or equal to a preset time via the pressurizing drive member.

The pressurization time of the pressurizing member at the pressurization position is controlled to be greater than or equal to the preset time via the pressurizing drive member, allowing the pressurizing member to implement continuous pressurization on the electrode assembly at the pressurization position, thus preventing the pressurized electrode assembly from rebounding.

In some embodiments, after the step of controlling the pressurizing apparatus to pressurize the electrode assembly, the processing method further includes: controlling, via a pressurizing drive member, a pressurizing member to move from a pressurization position to an original position; and taking out the pressurized electrode assembly. The pressurizing member is controlled via the pressurizing drive member to move from the pressurization position to the original position, which can ensure that the electrode assembly is taken out after the pressurizing member is at a safe position, improving the safety.

According to a third aspect, this application provides a battery cell, where the battery cell includes an electrode assembly manufactured using the processing method according to the foregoing embodiments.

In some embodiments, a height range of a flattened layer of the electrode assembly is 0-4 mm.

According to a fourth aspect, this application provides a battery including the battery cell according to the foregoing embodiments.

According to a fifth aspect, this application provides a production system of battery cell, including a flattening apparatus configured to flatten an electrode assembly of the battery cell; and the pressurizing apparatus according to the foregoing embodiments, where the pressurizing apparatus is configured to pressurize the flattened electrode assembly.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of a pressurizing apparatus and an electrode assembly according to some embodiments of this application;
FIG. 5 is a schematic cross-sectional view of an electrode assembly according to some embodiments of this application;
FIG. 6 is a schematic structural diagram of a positioning assembly according to some embodiments of this application;
FIG. 7 is a schematic exploded view of a positioning assembly according to some embodiments of this application;
FIG. 8 is a schematic structural diagram of a positioning assembly according to some embodiments of this application;
FIG. 9 is a schematic exploded view of a positioning assembly according to some embodiments of this application;
FIG. 10 is a schematic cross-sectional diagram of a clamping jaw according to some embodiments of this application;
FIG. 11 is a schematic flowchart of a processing method according to some embodiments of this application;
FIG. 12 is a schematic flowchart of step S402 according to some embodiments of this application;
FIG. 13 is a schematic flowchart of a processing method according to some embodiments of this application; and
FIG. 14 is a schematic frame diagram of a production system of a battery cell according to some embodiments of this application.

In the accompanying drawings, the accompanying drawings are not necessarily drawn to scale.

Reference signs: vehicle 1000, battery 100, controller 200, motor 300, box 10, battery cell 20, first portion 11, second portion 12, end cover 21, housing 22, electrode assembly 23, electrode terminal 21a, tab 23a, flattened layer 231, pressurizing apparatus 30, support member 31, pressurizing assembly 32, height direction X, pressurizing member 321, pressurizing drive member 322, connection rod 323, support frame 33, base 36, detection assembly 34, positioning assembly 35, mounting seat 351, clamping jaw 352, clamping jaw drive member 353, floating drive member 354, fixing member 355, guide rod 3541, elastic member 3542, bearing 3543, and mounting member 3544.

### DETAILED DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions.

In the description of this application, unless otherwise specified, the term "a plurality of" means more than two (inclusive). Similarly, "a plurality of groups" means more than two (inclusive) groups and "a plurality of pieces" means more than two (inclusive) pieces. The orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for the ease and brevity of description of the embodiments of this application rather than indicating or implying that the means or components mentioned must have specific orientations or must be constructed or manipulated according to specific orientations, and therefore shall not be construed as any limitations on embodiments of this application.

In the descriptions of this application, the terms "first", "second", and "third", and the like are merely for the purpose of description and shall not be understood as any indication or implication of relative importance. "Perpendicular" is not strictly vertical, but within the allowable range of error. "Parallel" is not strictly parallel, but within the allowable range of error.

In the description of this application, it should be further noted that, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of this application, it should be noted, like reference signs denote like components, and for brevity, in different embodiments, detailed descriptions of like components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

Currently, from the perspective of market development, application of batteries is being more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of batteries, market demands for traction batteries are also increasing.

The inventors have noted that due to a gap present in a multi-layer tab of the electrode assembly, when an adaptor or electrode terminal is laser-welded to the multi-layer tab of the electrode assembly, laser passes through the gap and penetrates the electrode assembly. An effective welding area between the tabs of the electrode assembly and the adaptor is small. Thus, the tab of the electrode assembly is flattened to obtain the flattened electrode assembly. The tab of the flattened electrode assembly is defined as a flattened layer of the electrode assembly, to increase the effective welding area of the flattened layer of the electrode assembly and prevent the laser from passing through the gap. However, to prevent heat of laser welding from damaging a separator, the flattened layer is designed to be high, and the flattened layer of the electrode assembly still occupies the space of the electrode assembly in the battery cell, resulting in decreased energy of the battery cell.

Based on the foregoing considerations, to resolve the problem of decreased energy of the battery cell, the inventors have designed a pressurizing apparatus through in-depth research. The two sides of the tab of the flattened electrode assembly are pressurized using the pressurizing apparatus, which can reduce the height of the flattened layer of the electrode assembly and the internal space of the battery cell occupied by the flattened layer of the electrode assembly, thus increasing the energy of the battery cell.

The battery cell disclosed in the embodiments of this application can be used for electric apparatuses that use a battery as a power source or various energy storage systems that use a battery as an energy storage element. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

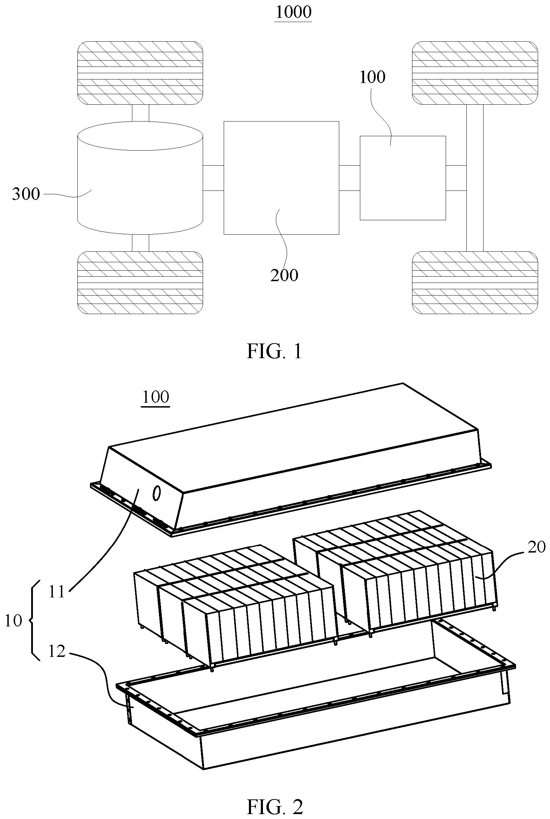

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 for the first portion 11 and the second portion 12 to jointly define an accommodating space; or alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, the battery cell 20 is present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the box 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

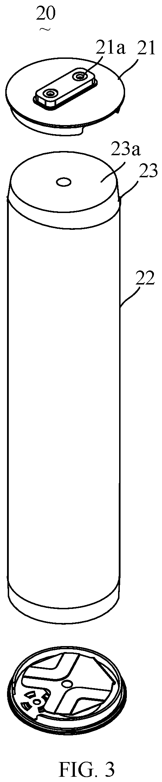

Referring to FIG. 3, FIG. 3 is a schematic structural exploded view of a battery cell 20 according to some embodiments of this application. The battery cell 20 refers to a smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate an internal environment of the battery cell 20 from an external environment. A shape of the end cover 21 is not limited and may be adapted to a shape of the housing 22 to fit the housing 22. Optionally, the end cover 21 may be made of a material with specified hardness and strength (for example, aluminum alloy), so that the end cover 21 is less likely to deform when subjected to extrusion and collision, allowing the battery cell 20 to have higher structural strength and enhanced safety performance. The end cover 21 may be provided with functional components such as an electrode terminal 21a. The electrode terminal 21a may be configured to be electrically connected to the electrode assembly 23, and the battery cell 20 may further include an adaptor. The adaptor is configured to connect the electrode terminal 21a and a tab 23a of the electrode assembly 23, so as to electrically connect the electrode terminal 21a and the tab 23a of the electrode assembly 23 for outputting or inputting electric energy of the battery cell 20.

The housing 22 is an assembly configured to form an internal environment of the battery cell 20 together with the end cover 21, where the formed internal environment may be used for accommodating the electrode assembly 23, an electrolyte, and other components. The electrode assembly 23 is a component in which electrochemical reactions occur in the battery cell 100. The housing 22 may include one or more electrode assemblies 23. The electrode assembly 23 is mainly formed by winding or stacking a positive electrode plate and a negative electrode plate, and a separator is generally disposed between the positive electrode plate and the negative electrode plate. Parts of the positive electrode plate and the negative electrode plate that have active substances constitute a body portion of the electrode assembly 23, while parts of the positive electrode plate and the negative electrode plate that have no active substances separately constitute tabs 23a. A positive tab and a negative tab may both be located at one end of the body portion or be located at two ends of the body portion respectively. During charge and discharge of the battery, a positive electrode active substance and a negative electrode active substance react with an electrolyte, and the tabs 23a are connected to the electrode terminals to form a current loop.

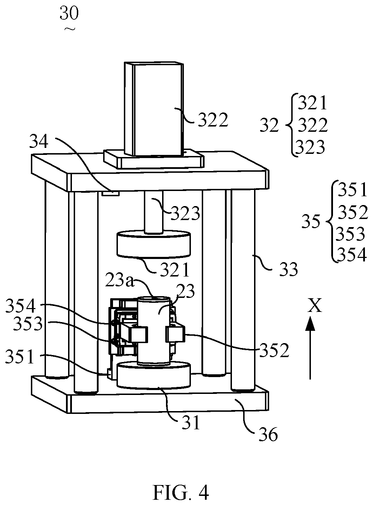

According to some embodiments of this application, referring to FIG. 4, FIG. 4 is a schematic structural diagram of a pressurizing apparatus and an electrode assembly according to some embodiments of this application. This application provides a pressurizing apparatus 30. The pressurizing apparatus 30 is configured to pressurize a flattened electrode assembly 23. The pressurizing apparatus 30 includes a support member 31 and a pressurizing assembly 32. The support member 31 is configured for placing the electrode assembly 23; and the pressurizing assembly 32 is configured to pressurize the electrode assembly 23. The support member 31 and the pressurizing assembly 32 are disposed on two sides of a tab 23a of the electrode assembly 23.

As shown in the figure, direction X is the height direction of the electrode assembly 23.

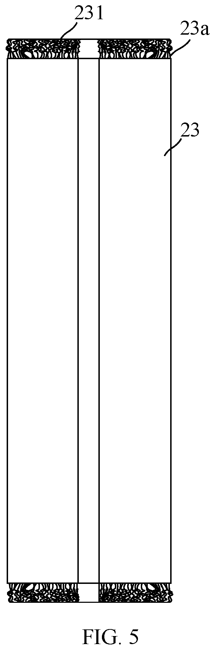

Referring to FIGs. 4 and 5, FIG. 5 is a schematic cross-sectional view of an electrode assembly according to some embodiments of this application. The "flattened electrode assembly 23" means that the tab 23a of the electrode assembly 23 is flattened; and the tab 23a of the flattened electrode assembly 23 is used as a flattened layer 231 of the electrode assembly 23. Due to a gap present between the tabs 23a of the electrode assembly 23, when an adaptor is laser welded to the tabs 23a of the electrode assembly 23, the laser passes through the gap and penetrates the electrode assembly 23. In addition, an effective welding area between the tab 23 of the electrode assembly 23 and the adaptor is small. Therefore, the tab 23a of the electrode assembly 23 is flattened, one end of the tab 23a of the flattened electrode assembly 23 is linear, and the other end of the tab 23a of the flattened electrode assembly 23 is curved, thus avoiding a gap in the tab 23a of the flattened electrode assembly 23 and preventing laser from penetrating the electrode assembly 23. In addition, the effective welding area between the flattened layer 231 of the flattened electrode assembly 23 and the adaptor increases, making it easy to weld the adaptor.

The "pressurizing apparatus 30" outputs pressure to pressurize the flattened electrode assembly 23. The flattened electrode assembly 23 is placed on the support member 31, and the pressurizing assembly 32 is configured to output pressure to pressurize the flattened electrode assembly 23 placed on the support member 31.

The "two sides of the electrode assembly 23" are two sides of the electrode assembly 23 having tabs 23a along the height direction (direction X in FIG. 4). For example, the two sides of the electrode assembly 23 include an upper side of the electrode assembly 23 and a lower side of the electrode assembly 23.

Optionally, the electrode assembly 23 is cylinder-shaped, and two sides of the electrode assembly 23 are both provided with a flattened layer 231. In other embodiments of this application, the electrode assembly 23 is flat, cuboid, or of other shapes.

The electrode assembly 23 is disposed on the support member 31, and the pressurizing assembly 32 is configured to pressurize the electrode assembly 23, where the pressurizing assembly 32 applies pressure to the electrode assembly 23, so as to compress the flattened layer 231 of the electrode assembly 23. This can reduce the height of the flattened layer 231 of the electrode assembly 23 and the internal space of the battery cell 20 occupied by the flattened layer 231 of the electrode assembly 23, thus increasing the energy of the battery cell 20. With the support member 31 and the pressurizing assembly 32 disposed on two sides of the tab 23a of the electrode assembly 23, as the pressurizing assembly 32 applies pressure to the electrode assembly 23, this is equivalent to that the support member 31 and the pressurizing assembly 32 respectively pressurize the two sides of the tab 23a of the electrode assembly 23, improving the pressurizing efficiency of the pressurizing apparatus 30.

According to some embodiments of this application, optionally, the tab 23a of the flattened electrode assembly 23 is configured to be welded to a connector, and the connector is configured to connect an electrode terminal and the tab 23a of the electrode assembly 23. Since thermal radiation is generated in the process of welding the tab 23a of the electrode assembly 23 to the connector, and the thermal radiation causes bums to the separator of the electrode assembly 23, the tab 23a of the flattened electrode assembly 23 needs to be provided with a safe region. Welding the connector to the safe region can prevent bums to the separator. However, the safe region occupies the space of the tab 23a of the electrode assembly 23, causing the flattened layer 231 of the electrode assembly 23 to occupy the space of the electrode assembly 23 in the battery cell. The pressurizing apparatus 30 is configured to pressurize the flattened electrode assembly 23 to reduce the height of the flattened layer 231 of the electrode assembly 23, so that the area of the safe region of the tab 23a of the flattened electrode assembly 23 can be increased, thus increasing the yield rate of welding the connector.

According to some embodiments of this application, optionally, still referring to FIG. 4, the pressurizing assembly 32 includes a pressurizing member 321 and a pressurizing drive member 322. The pressurizing drive member 322 is connected to the pressurizing member 321 and configured to drive the pressurizing member 321 to pressurize the electrode assembly 23.

The "pressurizing member 321" is a part in contact with the electrode assembly 23 in a process of the pressurizing assembly 32 pressurizing the electrode assembly 23. For example, the pressurizing member 321 is located on an upper side of the electrode assembly 23. The pressurizing member 321 may be a pressurizing plate or a pressurizing block.

The "pressurizing drive member 322" is a part providing pressure for the pressurizing member 321 in a process of the pressurizing assembly 32 pressurizing the electrode assembly 23. The pressurizing drive member 322 can adjust pressure applied to the electrode assembly 23 by the pressurizing member 321.

Optionally, the pressurizing assembly 32 includes a connection rod 323, the connection rod 323 is configured to connect the pressurizing drive member 322 and the pressurizing member 321, and the pressurizing drive member 322 drives the pressurizing member 321 via the connection rod 323.

The pressurizing drive member 322 drives the pressurizing member 321 to pressurize the electrode assembly 23, such that the pressurizing drive member 322 can adjust the pressure applied by the pressurizing member 321 to the electrode assembly 23, thus improving the pressurization accuracy.

According to some embodiments of this application, optionally, still referring to FIG. 4, the pressurizing apparatus 30 includes a support frame 33, and the pressurizing assembly 32 is mounted on the support frame 33.

The "support frame 33" is a part configured to support the pressurizing assembly 32 in the pressurizing apparatus 30, the pressurizing drive member 322 is mounted on the support frame 33, and the pressurizing member 321 is mounted on the pressurizing drive member 322.

Optionally, the pressurizing apparatus 30 includes a base 36, the support frame 33 and the support member 31 are fixed to the base 36, and the support member 31 is located below the pressurizing drive member 322 and the pressurizing member 321, such that the electrode assembly 23 placed at the support member 31 is located below the pressurizing member 321, and the pressurizing drive member 322 drives the pressurizing member 321 to pressurize the electrode assembly 23.

The pressurizing assembly 32 is mounted on the support frame 33, such that the pressurizing assembly 32 is located above the electrode assembly 23, which is conducive for the pressurizing assembly 32 to pressurize the electrode assembly 23.

According to some embodiments of this application, optionally, still referring to FIG. 4, the pressurizing apparatus 30 includes a detection assembly 34. The detection assembly 34 is disposed on the support frame 33 and configured to detect a distance between the electrode assembly 23 and the detection assembly 34.

Optionally, the detection assembly 34 may include a distance sensor or displacement sensor disposed on the support frame 33 and configured to detect the distance between the electrode assembly 23 and the detection assembly 34. For example, the detection assembly 34 is configured to detect a distance between the pressurizing member 321 and the detection assembly 34 and calculate the height of the electrode assembly 23 based on the distance between the pressurizing member 321 and the detection assembly 34.

The detection assembly 34 is disposed on the support frame 33 to detect the distance between the electrode assembly 23 and the detection assembly 34, and calculate the height of the electrode assembly 23 based on the distance. The height of the flattened layer 231 of the electrode assembly 23 is obtained based on the height of the electrode assembly 23. Through monitoring on the height of the flattened layer 231, the accuracy of the pressurizing assembly 32 in pressurizing the electrode assembly 23 can be improved, thus improving the consistency of the pressurized electrode assembly 23.

According to some embodiments of this application, optionally, still referring to FIG. 4, the pressurizing apparatus 30 includes a positioning assembly 35. The positioning assembly 35 is configured to position the electrode assembly 23 between the support member 31 and the pressurizing assembly 32.

Optionally, the positioning assembly 35 is fixed to the base 36, disposed adjacent to the electrode assembly 23, and configured to position the electrode assembly 23, such that the electrode assembly 23 is located between the support member 31 and the pressurizing assembly 32.

The positioning assembly 35 positions the electrode assembly 23 between the support member 31 and the pressurizing assembly 32, such that the electrode assembly 23 can be maintained at a position during pressurization, ensuring the consistency in the process of pressurizing the electrode assembly 23, improving the parallelism of the flattened layers 231 of the pressurized electrode assembly 23, and increasing the yield rate for the subsequent process. For example, the subsequent process of the electrode assembly 23 may be a welding process.

According to some embodiments of this application, optionally, still referring to FIG. 4, the positioning assembly 35 includes a mounting seat 351 and a clamping jaw 352. The clamping jaw 352 is floatingly mounted on the mounting seat 351, and the clamping jaw 352 is configured to clamp the electrode assembly 23.

The clamping jaw 352 can move with respect to the mounting seat 351, allowing the clamping jaw 352 to be floatingly mounted on the mounting seat 351. In the process of the pressurizing assembly 32 pressurizing the electrode assembly 23, the height of the flattened layer 231 of the electrode assembly 23 decreases, such that the height of the electrode assembly 23 decreases. In addition, the clamping jaw 352 is floatingly mounted on the mounting seat 351, allowing the clamping jaw 352 to move as the height of the electrode assembly 23 decreases. This can keep the clamping jaw 352 and the electrode assembly 23 stationary relative to each other, improving the consistency of the pressurizing apparatus 30 in pressurizing the electrode assembly 23.

According to some embodiments of this application, optionally, still referring to FIG. 4, the positioning assembly 35 includes a clamping jaw drive member 353. The clamping jaw 352 is connected to the clamping jaw drive member 353, and the clamping jaw drive member 353 is configured to drive the clamping jaw 352 to clamp the electrode assembly 23.

The clamping jaw drive member 353 drives the clamping jaw 352 to clamp the electrode assembly 23, and the clamping jaw drive member 353 can adjust the force of the clamping jaw 352 clamping the electrode assembly 23, to improve the stability of the clamping jaw 352 clamping the electrode assembly 23.

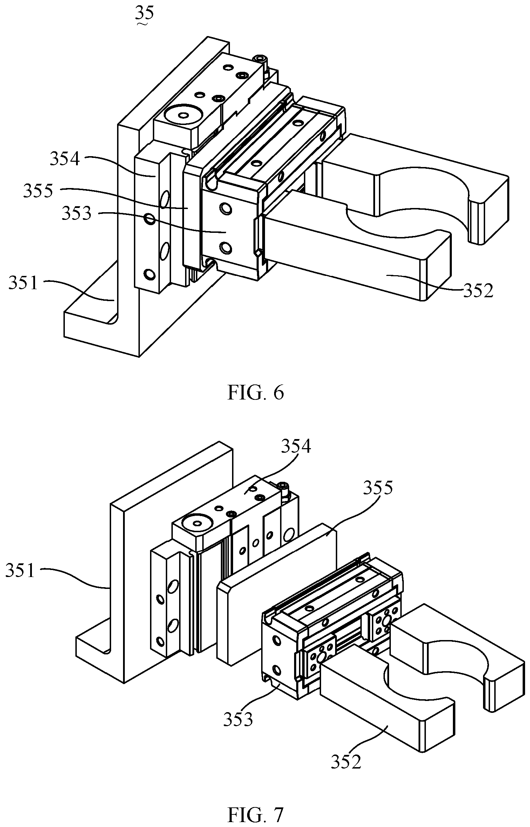

According to some embodiments of this application, optionally, referring to FIGs. 4 and 6, FIG. 6 is a schematic structural diagram of a positioning assembly according to some embodiments of this application. The positioning assembly 35 includes a floating drive member 354. The floating drive member 354 is mounted at the mounting seat 351, the clamping jaw drive member 353 is disposed on the floating drive member 354, and the floating drive member 354 is configured to drive the clamping jaw 352 and the clamping jaw drive member 353 to move along a pressurization direction of the pressurizing assembly 32.

The "pressurization direction of the pressurizing assembly 32" is a direction in which the pressurizing assembly 32 pressurizes the electrode assembly 23, that is, a direction in which the pressurizing drive member 322 drives the pressurizing member 321 to move. For example, the direction in which the pressurizing assembly 32 pressurizes the electrode assembly 23 is the same as the height direction X of the electrode assembly 23.

A cross-sectional shape of the clamping jaw 352 in the pressurization direction of the pressurizing assembly 32 is curved, square, or the like. The cross-sectional shape of the clamping jaw 352 in the pressurization direction of the pressurizing assembly 32 matches the shape of the electrode assembly 23, which is conducive for the clamping jaw 352 to position the electrode assembly 23.

In the process of the pressurizing assembly 32 pressurizing the electrode assembly 23, the height of the flattened layer 231 of the electrode assembly 23 decreases, causing the height of the electrode assembly 23 to decrease. The floating drive member 354 drives the clamping jaw 352 and the clamping jaw drive member 353 to move along the pressurization direction of the pressurizing assembly 32, to keep the clamping jaw 352 and the electrode assembly 23 stationary relative to each other, ensuring that the clamping jaw 352 clamps the electrode assembly 23 in a fixed posture.

According to some embodiments of this application, optionally, referring to FIGs. 6 and 7, FIG. 7 is a schematic exploded view of a positioning assembly according to some embodiments of this application. The floating drive member 354 is a floating cylinder. The clamping jaw 352 is mounted at the clamping jaw drive member 353, the clamping jaw drive member 353 is mounted at the floating drive member 354 via a fixing member 355, and the floating drive member 354 is mounted at the mounting seat 351.

The floating cylinder drives the clamping jaw 352 and the clamping jaw drive member 353 to move along the pressurization direction of the pressurizing assembly 32, which is easy to implement.

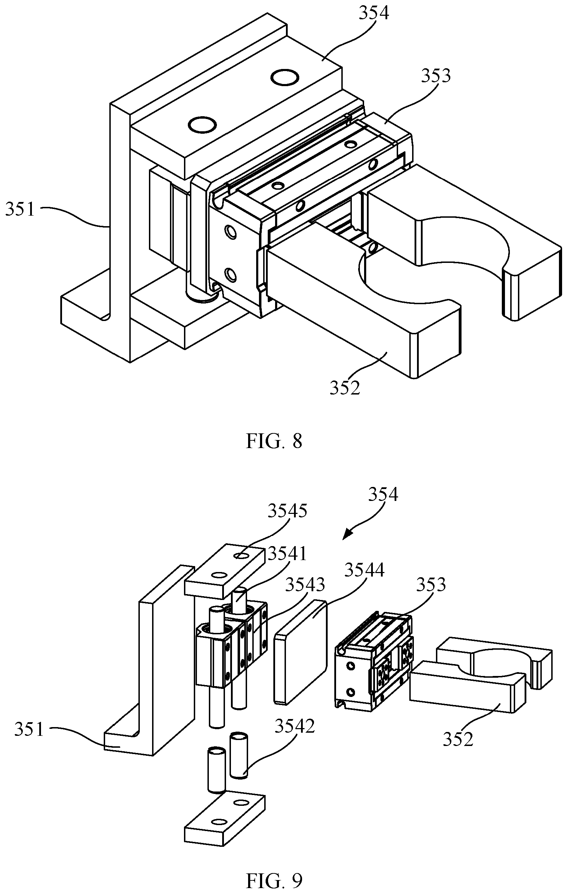

According to some embodiments of this application, optionally, referring to FIGs. 8 and 9, FIG. 8 is a schematic structural diagram of a positioning assembly according to some embodiments of this application, and FIG. 9 is a schematic exploded view of a positioning assembly according to some embodiments of this application. The floating drive member 354 includes a guide rod 3541, an elastic member 3542, a bearing 3543, and a mounting member 3544. The guide rod 3541 is mounted at a guide rod mounting seat 3545 of the mounting seat 351, the elastic member 3542 sleeves the corresponding guide rod 3541, and the bearing 3543 is disposed on the guide rod 3541. In addition, the elastic member 3542 is configured to support the bearing 3543; and the mounting member 3544 is disposed on the bearing 3543 and configured to mount the clamping jaw drive member 352.

The floating drive member 354 may include two guide rods 3541, two elastic members 3542, and two bearings 3543. The two bearings 3543 are mounted on one side of the mounting member 3544, and the clamping jaw drive member 352 is mounted on the other side of the mounting member 3544. The elastic member 3542 may include a leaf spring, a coil spring, a torsion bar spring, a gas spring, or a rubber spring; and the bearing 3543 may be a linear bearing, to move along the extension direction of the guide rod 3541.

The elastic member 3542 sleeves the corresponding guide rod 3541, the bearing 3543 is disposed on the guide rod 3541, and the elastic member 3542 is configured to support the bearing 3543. In a process of the pressurizing assembly 32 pressurizing the electrode assembly 23, the pressurizing assembly 32 applies pressure to the electrode assembly 23, and under the action of the pressure, the bearing 3543 compresses the elastic member 3542, so as to move along the extension direction of the guide rod 3541, thus keeping the clamping jaw 352 and the electrode assembly 23 stationary relative to each other. The structure is simple, and costs are reduced. The extension direction of the guide rod 3541 is the same as a direction in which the pressurizing assembly 32 pressurizes the electrode assembly 23.

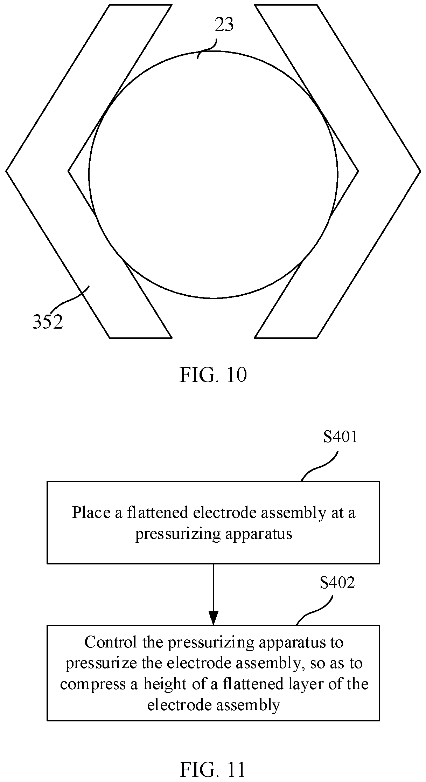

According to some embodiments of this application, optionally, referring to FIG. 10, FIG. 10 is a schematic cross-sectional diagram of a clamping jaw according to some embodiments of this application. A cross-sectional shape of the clamping jaw 352 is V-shaped in a pressurization direction of the pressurizing assembly 32.

The cross-sectional shape of the clamping jaw 352 is V-shaped in the pressurization direction of the pressurizing assembly 32, meaning that the clamping jaw 352 can provide clamp spaces of various sizes, allowing the clamping jaw 352 to clamp electrode assemblies 23 of different sizes.

According to some embodiments of this application, optionally, still referring to FIG. 4, the pressurization direction of the pressurizing assembly 32 is the gravity direction of the electrode assembly 23. The gravity direction of the electrode assembly 23 is the same as the height direction X of the electrode assembly 23.

The pressurizing assembly 32 pressurizes the electrode assembly 23 along the gravity direction of the electrode assembly 23, which is easy to implement.

According to some embodiments of this application, a pressurizing apparatus 30 is provided, and the flattened electrode assembly 23 is placed at the support member 31 so that the flattened electrode assembly 23 is supported. The clamping jaw 352 of the positioning assembly 35 is configured to clamp the electrode assembly 23, such that the clamping jaw 352 guides the electrode assembly 23 in the gravity direction of the electrode assembly 23, thus keeping the electrode assembly 23 in the vertical direction. The pressurizing drive member 322 drives the pressurizing member 321 to pressurize the upper side of the electrode assembly 23. In this case, the clamping jaw 352 and the clamping jaw drive member 353 move with respect to the floating drive member 354 along the pressurization direction of the pressurizing assembly 32, thus keeping the clamping jaw 352 and the electrode assembly 23 stationary relative to each other. This ensures that the clamping jaw 352 clamps the electrode assembly 23 in a fixed posture, so as to improve the parallelism of the flattened layers 231 of the electrode assembly 23. The pressurizing member 321 pressurizes the electrode assembly 23 to a pressurization position. The pressurizing drive member 322 drives the pressurizing member 321 to continuously apply pressure to the electrode assembly 23, and a pressurization time of the pressurizing assembly 32 is kept to be greater than or equal to a preset time. This can effectively prevent the flattened layer 231 of the pressurized electrode assembly 23 from rebounding. After the pressurizing drive member 322 drives the pressurizing member 321 to pressurize the electrode assembly 23, the pressurizing drive member 322 drives the pressurizing member 321 to return to the initial position, and the clamping jaw drive member 353 drives the clamping jaw 352 to open for taking out the pressurized electrode assembly 23. This can reduce the height of the flattened layer 231 of the electrode assembly 23 and the internal space of the battery cell 20 occupied by the flattened layer 231 of the electrode assembly 23, thus increasing the energy of the battery cell 20.

According to some embodiments of this application, this application further provides a processing method of battery cell. Referring to FIG. 11, FIG. 11 is a schematic flowchart of a processing method according to some embodiments of this application. The processing method includes the following steps:

S401: Place a flattened electrode assembly 23 at a pressurizing apparatus 30.

S402: Control the pressurizing apparatus 30 to pressurize the electrode assembly 23, so as to compress a height of a flattened layer 231 of the electrode assembly 23.

In step S401, a tab 23a of the electrode assembly 23 is flattened to obtain the flattened electrode assembly 23, where the tab 23a of the flattened electrode assembly 23 is the flattened layer 231. The flattened electrode assembly 23 is placed at the pressurizing apparatus 30. For example, the flattened electrode assembly 23 is placed at a support member 31 of the pressurizing apparatus 30 manually or automatically by the pressurizing apparatus 30.

In step S402, the pressurizing apparatus 30 is controlled to pressurize the electrode assembly 23, so as to compress the height of the flattened layer 231 of the electrode assembly 23. Specifically, the pressurizing drive member 322 is controlled to drive the pressurizing member 321 to pressurize the electrode assembly 23, so as to compress the height of the flattened layer 231 of the electrode assembly 23, that is, reduce the height of the flattened layer 231 of the electrode assembly 23.

Controlling the pressurizing apparatus 30 to pressurize the electrode assembly 23 so as to compress the height of the flattened layer 231 of the electrode assembly 23 can reduce the height of the flattened layer 231 of the electrode assembly 23 and the internal space of the battery cell 20 occupied by the flattened layer 231 of the electrode assembly 23, thus increasing the energy of the battery cell 20. In addition, the support member 31 and the pressurizing member 321 respectively pressurize two sides of the tab 23a of the electrode assembly 23, improving the pressurizing efficiency of the pressurizing apparatus 30.

Optionally, after step S401, the tab 23a of the flattened electrode assembly 23 is provided with a safe region. Welding a connector to the safe region of the tab 23a avoids bums to a separator of the electrode assembly 23. The area of the safe region of the tab 23a of the flattened electrode assembly 23 can be increased, thus increasing the yield rate of welding the connector.

According to some embodiments of this application, the processing method further includes: positioning the electrode assembly 23 when the electrode assembly 23 is pressurized.

The electrode assembly 23 is positioned when the electrode assembly 23 is pressurized, which can maintain the electrode assembly 23 at a position during the pressurization, improving the parallelism of the flattened layers 231 of the pressurized electrode assembly 23.

According to some embodiments of this application, the step of positioning the electrode assembly 23 when the electrode assembly 23 is pressurized includes: controlling a positioning assembly 35 of the pressurizing apparatus 30 to clamp the electrode assembly 23.

The positioning assembly 35 is disposed adjacent to the electrode assembly 23, and the positioning assembly 35 of the pressurizing apparatus 30 is controlled to clamp the electrode assembly 23, such that the electrode assembly 23 is located between the support member 31 and the pressurizing assembly 32. This can ensure the consistency in the process of pressurizing the electrode assembly 23, improve the parallelism of the flattened layers 231 of the pressurized electrode assembly 23, and increase the yield rate for the subsequent process. For example, the subsequent process of the electrode assembly 23 may be a welding process.

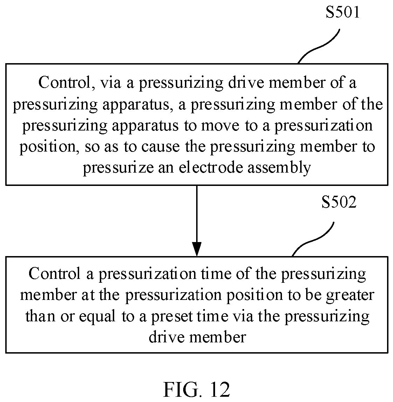

According to some embodiments of this application, referring to FIG. 12, FIG. 12 is a schematic flowchart of step S402 according to some embodiments of this application. Step S402 includes the following steps:
S501: Control, via a pressurizing drive member 322 of the pressurizing apparatus 30, a pressurizing member 321 of the pressurizing apparatus 30 to move to a pressurization position, so as to cause the pressurizing member 321 to pressurize the electrode assembly 23.
S502: Control a pressurization time of the pressurizing member 321 at the pressurization position to be greater than or equal to a preset time via the pressurizing drive member 322.

In step S501, the "pressurization position" is a position at which the pressurizing drive member 322 of the pressurizing apparatus 30 drives the drive member 322 to pressurize the electrode assembly 23. The pressurizing drive member 322 of the pressurizing apparatus 30 controls the pressurizing member 321 of the pressurizing apparatus 30 to move to the pressurization position, such that the pressurizing drive member 322 drives the pressurizing member 321 to pressurize the electrode assembly 23.

In step S502, the pressurization time of the pressurizing member 321 at the pressurization position is controlled to be greater than or equal to the preset time via the pressurizing drive member 322. Specifically, when the pressurizing drive member 322 drives the pressurizing member 321 to move to the pressurization position, the pressurizing drive member 322 controls the pressurizing member 321 to continuously apply pressure to the electrode assembly 23, so as to continuously pressurize the electrode assembly 23. The pressurization time is greater than or equal to the preset time, which can effectively prevent the flattened layer 231 of the pressurized electrode assembly 23 from rebounding. Therefore, the height of the flattened layer 231 of the electrode assembly 23 can be reduced, and the internal space of the battery cell 20 occupied by the flattened layer 231 of the electrode assembly 23 is reduced, thus increasing the energy of the battery cell 20.

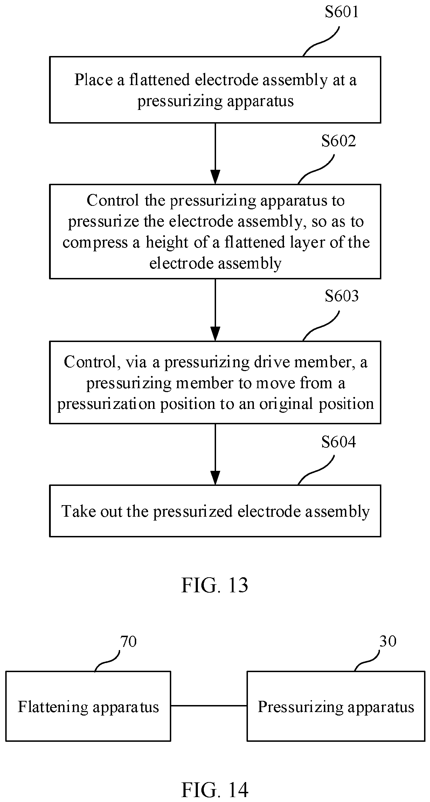

According to some embodiments of this application, referring to FIG. 13, FIG. 13 is a schematic flowchart of a processing method according to some embodiments of this application. The processing method includes the following steps:
S601: Place a flattened electrode assembly 23 at a pressurizing apparatus 30.
S602: Control the pressurizing apparatus 30 to pressurize the electrode assembly 23, so as to compress a height of a flattened layer 231 of the electrode assembly 23. Steps S601 and S602 are the same as steps S401 and S402, which are not repeated herein.
S603: Control, via a pressurizing drive member 322, a pressurizing member 321 to move from a pressurization position to an original position.
S604: Take out the pressurized electrode assembly 23.

The "original position" is a position at which the pressurizing member 321 is located before the pressurizing member 321 is driven by the pressurizing drive member 322 of the pressurizing assembly 32.

After the pressurizing drive member 322 controls the pressurizing member 321 to pressurize the electrode assembly 23, the pressurizing drive member 322 controls the pressurizing member 321 to move from the pressurization position to the original position, so as to take out the pressurized electrode assembly 23.

The pressurizing member 321 is controlled, via the pressurizing drive member 322 to move from the pressurization position to the original position, which can ensure that the electrode assembly 23 is taken out after the pressurizing member 321 is at a safe position, improving the safety.

According to some embodiments of this application, a processing method of battery cell is provided, including: rolling a tab 23a of an electrode assembly 23 to obtain the flattened electrode assembly 23; arranging a safe region for the tab 23a of the flattened electrode assembly 23, and welding a connector to the safe region of the tab 23a; placing the flattened electrode assembly 23 at a pressurizing apparatus 30 and controlling the pressurizing apparatus 30 to pressurize the electrode assembly 23; encapsulating the tab 23a of the pressurized electrode assembly 23; and with reference to FIG. 3, placing the encapsulated electrode assembly 23 into a housing 22, and covering an opening of the housing 22 with an end cover 21 and welding them.

Controlling the pressurizing apparatus 30 to pressurize the electrode assembly 23 so as to compress the height of the flattened layer 231 of the electrode assembly 23 can reduce the height of the flattened layer 231 of the electrode assembly 23 and the internal space of the battery cell 20 occupied by the flattened layer 231 of the electrode assembly 23, thus increasing the energy of the battery cell 20. In addition, the connector is welded to the safe region of the tab 23a, avoiding burns to a separator of the electrode assembly 23. Since the internal space of the battery cell 20 occupied by the flattened layer 231 of the electrode assembly 23 is reduced, the area of the safe region of the tab 23a of the flattened electrode assembly 23 can be increased, thus increasing the yield rate of welding the connector.

According to some embodiments of this application, a processing method of battery cell is provided, including: placing a flattened electrode assembly 23 at a support member 31 of a pressurizing apparatus 30; controlling a clamping jaw 352 of a positioning assembly 35 to clamp the electrode assembly 23, such that the clamping jaw 352 guides the electrode assembly 23 along a gravity direction of the electrode assembly 23, so as to keep the electrode assembly 23 in a vertical direction; controlling, via a pressurizing drive member 322, a pressurizing member 321 to pressurize an upper side of the electrode assembly 23, where the clamping jaw 352 moves along a pressurization direction of a pressurizing assembly 32, keeping the clamping jaw 352 and the electrode assembly 23 stationary relative to each other and ensuring that the clamping jaw 352 clamps the electrode assembly 23 in a fixed posture, so as to improve the parallelism of flattened layers 231 of the electrode assembly 23; controlling a pressurization time of the pressurizing member 321 at a pressurization position to be greater than or equal to a preset time via the pressurizing drive member 322, effectively preventing the flattened layer 231 of the pressurized electrode assembly 23 from rebounding; and controlling, via the pressurizing drive member 322, the pressurizing member 321 to move from the pressurization position to an original position, so as to take out the pressurized electrode assembly 23, improving the safety.

According to some embodiments of this application, a battery cell 20 is provided, including an electrode assembly 23 manufactured using the processing method according to any one of the foregoing solutions.

According to some embodiments of this application, a height range of a flattened layer 231 of the electrode assembly 23 is 0-4 mm, and a height of the flattened layer 231 of the electrode assembly 23 may be 0 mm, 0.5 mm, 1 mm, 1.5 mm, 2 mm, 2.5 mm, 3 mm, 3.5 mm, or 4 mm.

The height range of the flattened layer 231 of the pressurized electrode assembly 23 is designed to be 0-4 mm, which can reduce the height of the flattened layer 231 of the electrode assembly 23 and the internal space of the battery cell 20 occupied by the flattened layer 231 of the electrode assembly 23, thus increasing the energy of the battery cell 20.

According to some embodiments of this application, a battery 100 is provided, including the battery cell 20 according to any one of the foregoing solutions.

According to some embodiments of this application, a production system of battery cell is provided. Referring to FIG. 14, FIG. 14 is a schematic frame diagram of a production system of battery cell according to some embodiments of this application. The production system of battery cell includes a flattening apparatus 70 and the pressurizing apparatus 30 according to any one of the foregoing solutions. The flattening apparatus 70 is configured to flatten an electrode assembly 23 of a battery cell 20, and the pressurizing apparatus 30 is configured to pressurize the flattened electrode assembly 23.

The pressurizing apparatus 30 of the production system of battery cell is configured to pressurize the flattened electrode assembly 23. This can reduce the height of the flattened layer 231 of the electrode assembly 23 and the internal space of the battery cell 20 occupied by the flattened layer 231 of the electrode assembly 23, thus increasing the energy of the battery cell 20.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A pressurizing apparatus, configured to pressurize a flattened electrode assembly, wherein the pressurizing apparatus comprises:
a support member configured for placing the electrode assembly; and
a pressurizing assembly configured to pressurize the electrode assembly, wherein the pressurizing assembly and the support member are disposed on two sides of a tab of the electrode assembly.

2. The pressurizing apparatus according to claim 1, wherein the pressurizing assembly comprises:
a pressurizing member configured to pressurize the electrode assembly; and
a pressurizing drive member connected to the pressurizing member and configured to drive the pressurizing member to pressurize the electrode assembly.

3. The pressurizing apparatus according to claim 1 or 2, wherein the pressurizing apparatus comprises a support frame, and the pressurizing assembly is mounted on the support frame.

4. The pressurizing apparatus according to claim 3, wherein the pressurizing apparatus comprises a detection assembly disposed on the support frame and configured to detect a distance between the electrode assembly and the detection assembly.

5. The pressurizing apparatus according to any one of claims 1 to 4, wherein the pressurizing apparatus comprises a positioning assembly configured to position the electrode assembly between the support member and the pressurizing assembly.

6. The pressurizing apparatus according to claim 5, wherein the positioning assembly comprises:
a mounting seat; and
a clamping jaw floatingly mounted on the mounting seat, wherein the clamping jaw is configured to clamp the electrode assembly.

7. The pressurizing apparatus according to claim 6, wherein the positioning assembly comprises:
a clamping jaw drive member, wherein the clamping jaw is connected to the clamping jaw drive member, and the clamping jaw drive member is configured to drive the clamping jaw to clamp the electrode assembly.

8. The pressurizing apparatus according to claim 7, wherein the positioning assembly comprises:
a floating drive member mounted at the mounting seat, wherein the clamping jaw drive member is disposed on the floating drive member, and the floating drive member is configured to drive the clamping jaw and the clamping jaw drive member to move along a pressurization direction of the pressurizing assembly.

9. The pressurizing apparatus according to claim 8, wherein the floating drive member is a floating cylinder.

10. The pressurizing apparatus according to claim 8, wherein the floating drive member comprises:
a guide rod mounted on a guide rod mounting seat of the mounting seat;
an elastic member, wherein the elastic member sleeves the corresponding guide rod;
a bearing disposed on the guide rod, wherein the elastic member is configured to support the bearing; and
a mounting member disposed on the bearing and configured to mount the clamping jaw drive member.

11. The pressurizing apparatus according to any one of claims 6 to 10, wherein a cross-sectional shape of the clamping jaw is V-shaped in a pressurization direction of the pressurizing assembly.

12. The pressurizing apparatus according to any one of claims 1 to 11, wherein a pressurization direction of the pressurizing assembly is a gravity direction of the electrode assembly.

13. A processing method of battery cell, wherein the processing method comprises:
placing a flattened electrode assembly at a pressurizing apparatus; and
controlling the pressurizing apparatus to pressurize the electrode assembly, so as to compress a height of a flattened layer of the electrode assembly.

14. The processing method according to claim 13, wherein the processing method further comprises:
positioning the electrode assembly when the electrode assembly is pressurized.

15. The processing method according to claim 14, wherein the step of positioning the electrode assembly when the electrode assembly is pressurized comprises:
controlling a positioning assembly of the pressurizing apparatus to clamp the electrode assembly.

16. The processing method according to any one of claims 13 to 15, wherein the step of controlling the pressurizing apparatus to pressurize the electrode assembly comprises:
controlling, via a pressurizing drive member of the pressurizing apparatus, a pressurizing member of the pressurizing apparatus to move to a pressurization position, so that the pressurizing member pressurizes the electrode assembly; and
controlling a pressurization time of the pressurizing member at the pressurization position to be greater than or equal to a preset time via the pressurizing drive member.

17. The processing method according to claim 13, wherein after the step of controlling the pressurizing apparatus to pressurize the electrode assembly, the processing method further comprises:
controlling, via a pressurizing drive member, a pressurizing member to move from a pressurization position to an original position; and
taking out the pressurized electrode assembly.

18. A battery cell, wherein the battery cell comprises an electrode assembly manufactured using the processing method according to any one of claims 13 to 15.

19. The battery cell according to claim 18, wherein a height range of a flattened layer of the electrode assembly is 0-4 mm.

20. A battery, comprising the battery cell according to either of claims 18 and 19.

21. A production system of battery cell, comprising:
a flattening apparatus configured to flatten an electrode assembly of the battery cell; and
the pressurizing apparatus according to any one of claims 1 to 12, wherein the pressurizing apparatus is configured to pressurize the flattened electrode assembly.
